# EUROPEAN PATENT APPLICATION

(11) **EP 4 265 840 A1**
(43) Date of publication of application: **25.10.2023**
(21) Application number: 22168762.7
(22) Date of filing: 19.04.2022
(51) Int. Cl.: D21J 3/00, D21J 7/00

(54) **MOLD FOR MANUFACTURING OF A MOLDED FIBER PRODUCT**

(71) Applicant: Valmet Technologies Oy, 02150 Espoo (FI)
(72) Inventor: PITKÄNEN, Heidi, 04400 JÄRVENPÄÄ (FI); SIIRA, Tomi, 40101 JYVÄSKYLÄ (FI); TRÄFF, Henrik, 85194 SUNDSVALL (SE); VAINIO, Kevin, 40720 JYVÄSKYLÄ (FI)
(74) Representative: Kespat Oy

(57) **Abstract**

The invention relates to a mold for manufacturing of a molded fiber product. The mold (11) includes a permeable product surface (23) made by additive manufacturing. The product surface (23) includes a porous layer (30) and an integral support structure (31) on the opposite side compared to the product surface (23), which support structure (31) consists of cavity and protrusion structures forming open volume (39) .

## Description

The present invention relates to a mold for manufacturing of a molded fiber product, which mold includes a permeable product surface made by additive manufacturing.

EP-patent number EP3237680 discloses a mold produced in an additive manufacturing process such as a 3D-printing process. Such an additive manufacturing process may comprise selective sintering of a powdery material having particles of an average size of 1 - 50 microns, preferably 5 - 30 microns. On the other hand, the powder grain size of 40 - 45 microns is common. During the sintering process, the powdery material is completely melted through the addition of energy by means of a laser beam. In the additive manufacturing process the wall of the mold is equipped with several small through holes to achieve a dense perforation for permeability. Thus, the tool wall portion is presenting pores, which are provided by a plurality of channels extending through the tool wall portion, from the product face to the back face.

It is laborious to manufacture the mold traditionally by machining from a solid piece of raw material. On the other hand, machining of complex structures is impossible. In addition, the through holes of the product surface can be too big which may cause clogging. The product surfaces equipped with extra metal mesh makes marks on the surface of the product. These marks may remain in spite of hot pressing. It is also laborious to clean the mold. The product surface makes the final molded fiber product rough and thereby suitable only for lower quality products because of markings. And more, the known mold explained above is usually for pulp as fiber suspension or fiber slurry only where the mold is dipped into fiber slurry and thereafter fiber product is sucked to the surface of the mold from a water suspension or injected through channels with excess of water.

The object of the invention is to provide for manufacturing of a molded fiber product a new kind of mold, which is more versatile than before, and also easier and quicker to manufacture. The characteristic features of the mold according to the invention are stated in the accompanying Claim 1. The properties of the mold can be easily varied and thereby achieving new porous structures and some combinations also. Porous means in this application minute interstices through which liquid, air or steam may pass via various undefined routes unlike in the perforation or hole which goes from one surface to an another as a defined channel. Besides, the mold is manufactured in less time thus saving the costs. In addition, the mold has good strength even when the shape of the mold can be complex. Also, the mold is easy to be cleaned. And more, product changes can be done faster and easier than before, and the manufacturing costs are lower than earlier. Another object of the invention is to provide a new and effective way to make additive manufactured molds for molded fiber products. With the new mold the process times are short and high pressures may be used. Simultaneously, the idle times are short since the molds are quick and easy the maintain.

The invention is described below in detail by referring to the enclosed drawings, which illustrate some of the embodiments of the invention, in which
- Figure 1: shows a top view of molds according to the invention for forming of a molded fiber product,
- Figure 2a: shows a side view of a pair of molds according to the invention,
- Figure 2b: shows a partial enlargement of Figure 2a,
- Figure 3a: shows a side way of the mold according to the invention the parts disconnected,
- Figure 3b: shows the mold of Figure 3a the parts connected,
- Figure 4a: shows the parts of Figure 3a in cross section,
- Figure 4b: shows the parts of Figure 3b in cross section,
- Figure 5: shows a pair of molds in hot-pressing.

Molded fiber products, called also as MFP are made from cellulose fibers. Such products are disposable cups or plates, for example. Cellulose fibers are first dispersed in water, then formed, drained, and dried. One specific way to manufacture molded fiber products is thermoforming. After forming, the product is pressed with high temperature and pressure, the combination of which drains and evaporates the water and moisture out of the product. Advantageously, the ingredients are foamed before the forming, since the mold according to the invention suits perfectly for foam, especially in the thermoforming, like later stated. Thus, no oven drying is needed and high quality, thin walled products are ready after manufacturing. The dimensional accuracy and rigidity are good, and the surface of the product is smooth.

Both forming and pressing need mold tool pairs that consist of one positive and one negative mold tool. At least one tool in the pair need to have drainage properties in the product surface contacting the fiber product, achieved by either perforation and/or somehow permeable material. This allows for water and steam and air to travel through the perforated or otherwise permeable surface in the forming and/or pressing steps of the process.

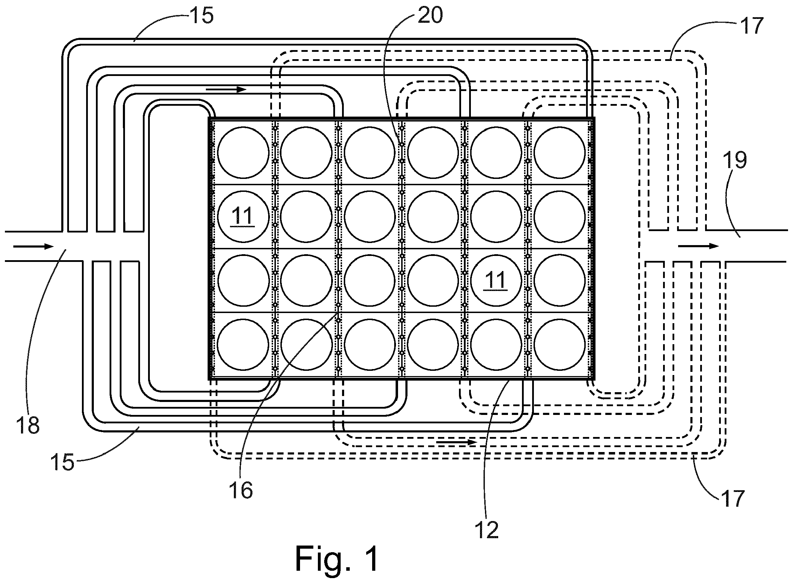

In Figure 1 there are molds 11 combined together to a mold base 12. In principle, one mold is a negative mold while the other one is a corresponding positive mold. In this way, during the forming the product gets three-dimensional shape. The water and air of the foam must be removed. This is done mainly by closing the pair of molds and vacuum aids the water removal. In the hot-pressing also steam and air blows aid the water removal. In other words, the distance between the opposite molds changes. When the pair is closing, the pressure forces air and water out of the foam fed between the molds. The permeable product surfaces of the molds are arranged to way out for water and air while the remaining fibers form a layer. After opening the pair, the product can be moved to the next process stage.

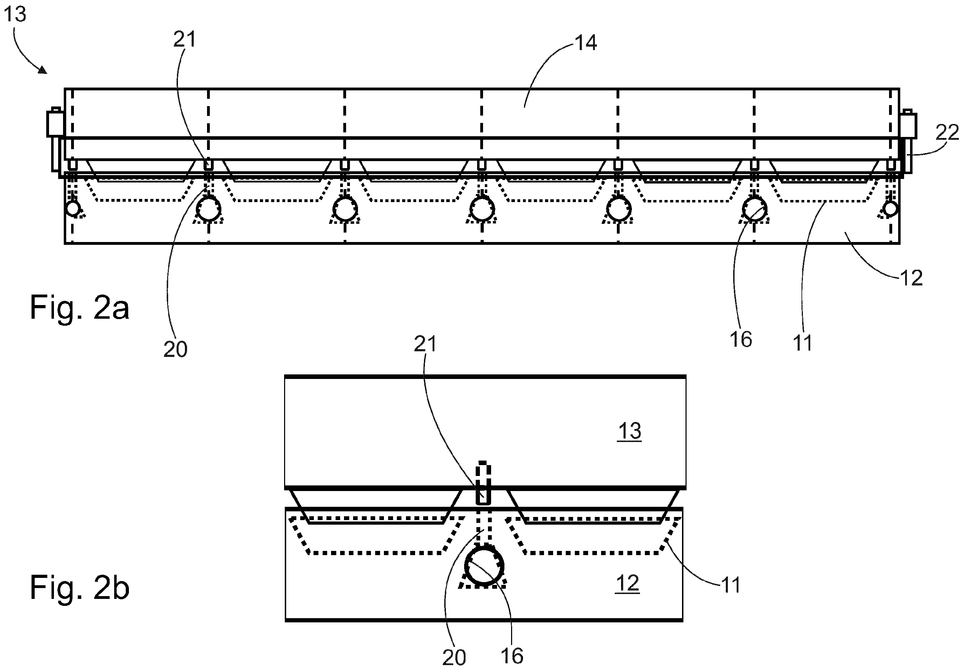

In the shown embodiment, foam is fed via the mold base 12 in between the molds while the pair 13 is sealed from its sides (Figure 2a). Here, the positive upper molds are supported to a mold frame 14. Thus, even the molds are apart, i.e. the pair is open, there is a closed cavity for foam. In this way, the feeding of foam is quick, and the timing can be selected more freely than before. Non-product surface of the mold may be used for inlets for foam. In detail, through openings are in the selected edges of a mold and especially between facing surfaces of the adjacent molds. However, in the shown embodiment, the pair 13 is formed of the upper mold frame 14 and the lower mold base 12, and the upper mold frame 14 is moved while the lower mold base 12 is arranged stationary. In other words, the lower mold base 12 is stationary, and foam is fed via it. The upper mold frame is movable. In this way, pipelines and other conduits connected to the lower mold base also remain in place, and the movable upper mold frame can be light-weighted. The light upper mold frame can be moved quicky and precisely. This accelerates the sequences of the molded fiber production machine. At the same time, the pipelines and other conduits stay stationary (Figure 1).

As described above, foam is fed through the mold. In Figure 1 is shown the mold base 12 with inlets 15. More precisely, each inlet 15 is connected to a lateral channel 16 through the mold base 12 and there is also a return conduit 17. Here the inlets are connected to a feed manifold 18 for feeding foam evenly to each inlet 15. Correspondingly, the return conduits 17 are connected to a return manifold 19. In this way foam flows constantly through the mold frame. Advantageously, the lateral channels 16 open between the molds 11 via several openings 20 on the mold surface, more precisely to a neck area between the product areas of the molds. In this way, foam will spread quickly and evenly between the molds. Here, the openings are situated on the neck area between the products, and they are upward. At the same time, the opposite mold frame 14 has pins 21 at the points of the openings 20 (Figure 2a and 2b). The pins have two main tasks. First, each pin guides the molds during the closing. This keeps the pair in shape and the product precise. Second, each tapered pin closes the opening of its own and cleans the opening. So, the closing the pair automatically shuts off the feed preventing backflow into the inlets or lateral channels. Vice versa, opening the pair opens the lateral channels and foam fills the mold space. The foam feed channels like inlets 15 and openings 20 to molding space are favorable in connection of the side walls of the molds.

For sealing, the pair 13 has an outer sleeve 22 arranged to seal the pair 13 even the molds base 12 and mold frame 14 are at a distance from each other. In this way, a close mold space is formed, and a great volume of foam can be fed to the mold space, which is like a closed cavity. Advantageously, the outer sleeve 22 is adjustable in relation to the pair 13. Thus, the sleeve may slide and give room for the product when the product is removed and shifted to the hot-pressing. There may be one common sleeve or both molds may have a sleeve of their own.

As shown previously, the lateral channels 16 are arranged between the molds 11, and they include openings 20 to the mold surface. In this way, each mold is evenly filled with foam. Thus the products are uniform, and the process is quick. In practice, foam circulates through the mold base. When the upper mold frame is lifted, the pins come out of the openings, and the foam flows into the mold space. The filling is quick, and again when the pair closes, the pins close the openings. This valving feature can be use with the actual valves before the manifold or independently.

As mentioned earlier, the mold 11 includes a permeable product surface 23 made by additive manufacturing. According to the invention, the product surface 23 includes a porous layer 30 and an integral support structure 31 on the opposite side compared to the product surface 23, which support structure 31 consists of cavity and protrusion structures forming open volume 39. In other words, there is at least partially hollow inner structure open to an outlet. At the same time, there is large open volume for fluid removal.

In the shown embodiment, the product surface 23 is arranged as a skin 24 supported to a base structure 25. In this way the porous skin may be thin while the support structure ensures rigid support. Simultaneously, the skin and the base structure can be optimized. Especially, the properties of the skin can be adapted for each production and product. The skin surface is at least corresponding the product area and preferably the whole surface area facing to the product. The edges of the skin are solid closing the structure to the sides of the mold. This narrow solid collar can be made to the skin or to the side wall of the base structure.

Advantageously, the skin 24 is detachably arranged to the base structure 25. In other words, the skin 24 is detachable from the base structure 25. In this way, the skin and the base structure can be manufactured separately, even from different materials. Simultaneously, the skin is easy to detach for cleaning and exchange. To change the manufactured product, only the skin needs to be changed. This allows the base structure and skin to be of different materials, for example a skin made of metal and the base structure made of a polymer. The benefit is the ability to reduce manufacturing costs and add properties to the tooling such as thermal insulation and wear resistance where it matters. Applicable materials can be metals, polymers, composites, biodegradables, ceramics, or a combination of these.

As said earlier, the base structure 25 has a universal geometry for several skins 24 with different properties. In this way, the base structure may stay in the production machine and only the skin is changed at the time of the product change. In the same way, the skin can be quickly changed for cleaning and renovation. If the product to be manufactured is not changed, a same kind of skin attached to the base structure while the previous skin is cleaned without any hurry. Then the production interruption time is minimized. Advantageously, several base structures are arranged into a mold base.

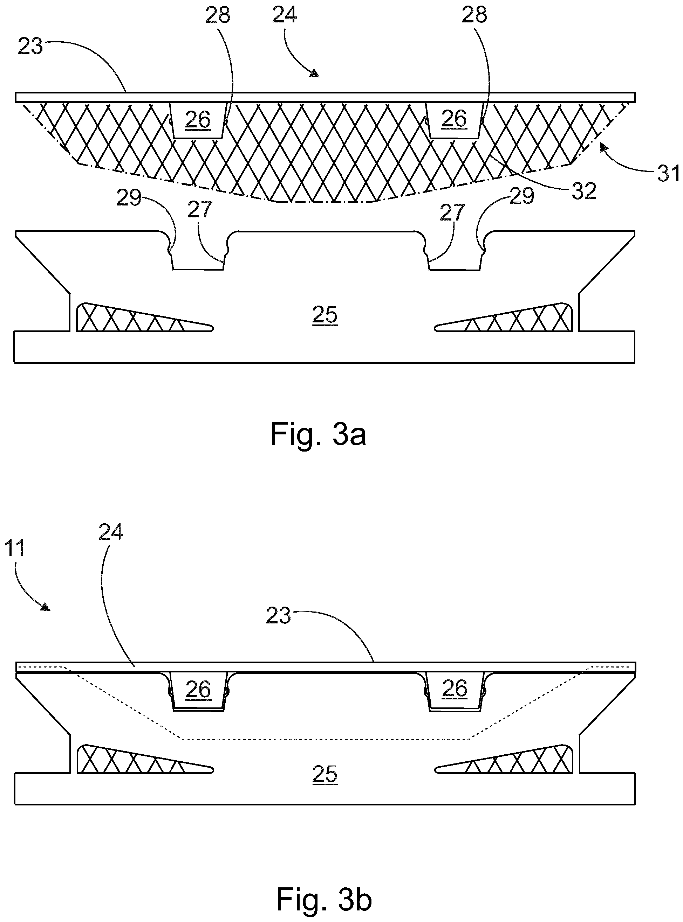

There are many ways how to attach the parts together. In Fig 3a is shown two at least partially tapered snap-fit structures 26 arranged on one side of the skin 24. Actually, there are similar cones on each side of the skin 24, which is a square in shape. In this way, the skin is rigidly attached to the base structure. There is a corresponding hole 27 for each snap-fit structures 26 in the base structure 25. The cones will align the skin properly and the attachment is backlash free. In Figure 3a, the snap-fit structures 26 has an annular protrusion 28 while the hole 27 has a corresponding groove 29. When the skin is assembled, the protrusion will snap fit into the groove. This form locking keeps the skin attached during the forming process of the product, but the skin can be detached simply by pulling. Alternatively or in addition, one or more bolts maybe used for securing the attachment. Also glue or other adhesive maybe used for attaching and sealing the skin. The skin may be attached to the base structure either by hinged frame, bayonet, form locking, screws with or without sealing with silicon or glue.

In the shown embodiment, the layer 30 forms the product surface 23 and the support structure 31 is on the opposite side compared to the product surface 23. The layer has a specific porosity according to the production. Then the support structure has more open construction. In practice, the support structure lays on the base structure. In this way, the load from the product surface is conveyed via the support structure to the base structure. Of course, the support structure brings stiffness to the thin layer. In this way, the skin may be manufactured, handled, and attached easily.

Advantageously, the layer 30 and the support structure 31 form a uniform structure. In other words, both are printed at the same time in one piece. In this way, the structure can be optimized. This reduces the size of the skin but keeps the open volume large. Simultaneously, the time of printing the skin get shorter. Alternatively, the layer 30 and the support structure 31 are different parts. This enables using different skins with one support structure. However, the layer must have enough stiffness of its own. So, the thickness of the layer increases. This may increase the weight of the whole skin. On the other hand, only the layer of the skin may be changed while the support structure remains. Again, different material may be used.

In Figures 3a and 3b the support structure 31 includes a three-dimensional lattice 32 made by additive manufacturing. The lattice brings good stiffness and support for the layer, but still a lot of open space for air, water, and steam. Alternatively or in addition, also honeycombs or cavities or other combination structure are possible.

With the stiff support structure, the layer may be thin. In practice, the thickness of the layer 30 is 0,5 - 10 mm, advantageously 1 - 4 mm. The thinner skin layer gives more space for the products. Maximizing space in the molds might get important with more radical product shapes. Then making a slightly thinner skin with less porosity helps to increase space and thus allowing slightly bigger end products within the given tool frame. Support structure part can be even thicker than the porous surface of the skin. The layer is dense enough but stays open and clear without clogging. Also water runs quickly through the thin layer, which facilitates the forming and pressing of the product. Advantageously, the layer 30 has random made porosity. In other words, the layer is at least partly without defined holes forming undefined mesh, where particles are melt together leaving some open volume therebetween. Thus, the porosity of the layer is small enough to drain air and water out of the product during the forming and pressing, but to still hold the fibers on the product surface of the skin. In other words, the porous layer is capable of separating fibers from fluid. This is important when using foam where a mixture of fibers, water and air is led between two molds. In practice, foam is carrying the fibers for the forming. In foam forming technology aqueous foam instead of water is used as a carrier medium in the manufacturing process of fiber-based products. The porous skin is randomly formed with different porosity size channels for air and water transfer. The skin includes random porous smaller porosity channels combined with larger channels as the support structure. In other words, the support structure can have complex cavity and protrusion structures between the base and the product surface. While at least the product surface is partly porous, there is at least in the edges a solid surface which prevents air leaking to the skin and mold. Advantageously only the very edges of the skin are solid for preventing especially the steam escaping in the hot press.

Depending on the product produced with the mold, the layer 30 may consist of several parts having different properties. For example, the thickness of the layer 30 may be uneven in different parts of the product surface 23. For example, recesses can be used on the surface away from the product surface making better permeability in such locations. Also, the printing parameters may be different to adjust the properties of the layer. In this way, the mold and its product surface can be easily optimized.

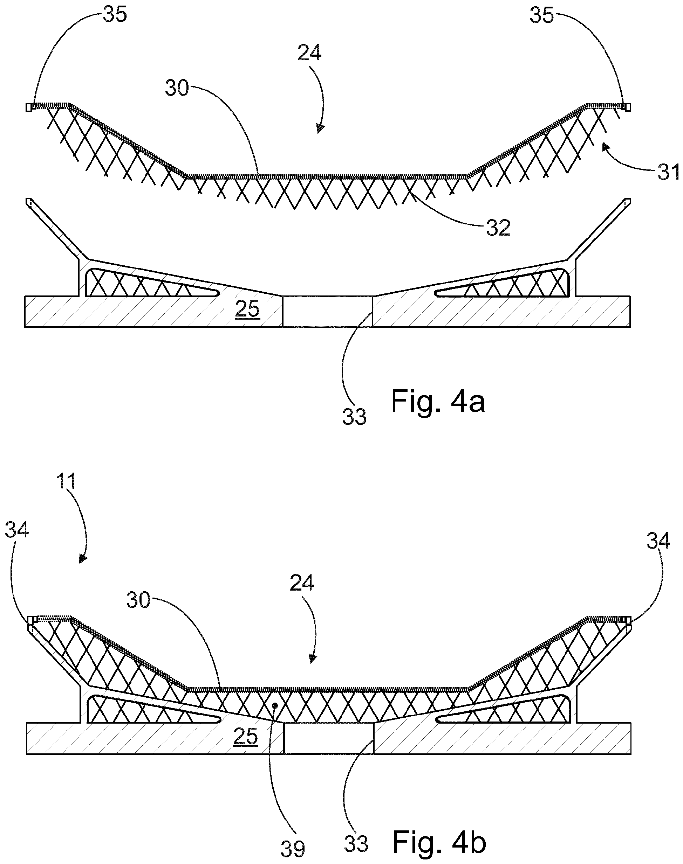

Water and air running through the skin are collected by the base structure. Like in Figures 4a and 4b, at the center of the base structure 25 there is an outlet 33. The outlet is connected to a pipe or similar (not shown). Advantageously, also vacuum is used to aid the water removal. Since the outlet is in the center, vacuum is distributed evenly, and water flows smoothly towards the center. Advantageously, the base structure has a bucket-like geometry sloping to the center of the base structure 25. This aids the drainage. Also, the support structure 31 contours the forms of the base structure 25. In this way, the structure of the mold is rigid and the load from the product surface is supported with the support structure and the base structure together. Thus, the structures may be light when all parts cooperate. This also facilitates the printing process of the skin and the base structure.

Here the mold has size of 200*200 mm. If needed, also bigger sizes are possible, for example up to 300 - 500 mm edge length. The combination structure of the skin and the base structure thickness is here less than 50 mm, but the thickness of the base structure can be up to 100 - 300 mm. In the production machine, several molds are assembled side by side with support structures against to the mold bases to result a mold matrix. Especially, the detachable skin allows better cleaning of each mold. The random made product surface has good quality which may or may not require post-processing depending on the product requirements. The design of the mold with edge feed allows some space in the edges for skin attachment arrangement. The skin 24 has a recess 34 at the point of the opening and the pin. Here there is also a solid edge collar 35 next to recess 34. This solid frame or collar around the skin prevents air and pressure leakage. This solid edge is only 1 - 3 mm narrow. Thus the area of the process surface is maximized while the size of the skin is minimized. In addition, the detachable skin allows quick or even toolless skin change. The open inner lattice improves dewatering and drying with porous skin. Especially the skin can be optimized, which allows low structures. This reduces costs and shortens the printing time.

Surprisingly, the layer is at least semi randomly made by additive manufacturing. The semi random structure has an uncontrolled geometry which lacks through holes. Thus, the layer is like a mesh having good porosity for air and water, but still good restraint for fibers. This ensures good forming and pressing properties with low energy. The properties of the layer are dictated by various parameters in the printing process, such as laser power, laser speed, layer height, scan line distances and over all scanning strategy. Also, the use of an electron beam is possible.

In practice, the layer has porosity of 20 - 40%. Then, the air and water will flow out while the fibers will settle on the product surface of the mold. The porosity level will be easy to adjust by 3D-printing. In other words, there can be different porosity levels in different parts of the skin. Also, the flow resistance of the layer will increase with layer thickness likely linearly. For example, when the thickness doubles, also the flow resistance doubles. Anyhow, when compared to traditional perforated mold surface, the porous skin can be made thinner when reducing porousness and increasing density.

While the layer has superb properties, advantageously there is a support structure in the skin for supporting the layer. In this way, the layer can be thin, while the drainage is efficient. Also, the support structure will keep the layer in shape even in the hot temperatures and during press loads.

As shown in Figure 3a, there is in the skin 24 in addition to the layer 30 the lattice 32 supporting the layer 30. By the lattice, fluid will flow also in lateral direction and in any direction in the lattice. Thereby the drainage will be efficient and well-focused. Advantageously, the suction will be connected to an outlet 33 to aid the removal of air and water (Figure 4a). The lattice can vary inside the mold. In other words, it is possible to generate structures according to loading needs in the mold.

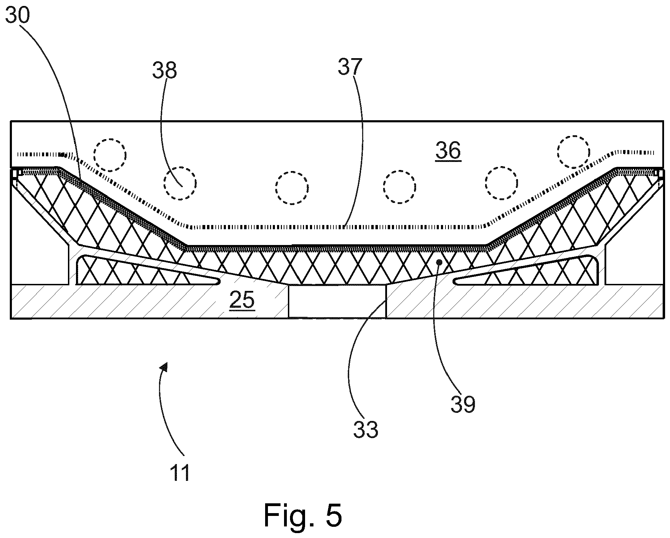

The shown mold is suitable for both forming and hot-pressing. Next to the forming unit there is one or more hot-press units. Figure 5 shows one pair of molds for a hot-press unit. Advantageously there are two consecutive hot pressing units, but more generally there are one to three hot-press units. In Figure 5 the lower mold 11 is porous according to the invention while the upper hot-press mold 36 has a smooth surface. The mold according to invention is an excellent pair to a heated mold with a smooth product surface. In another pair the lower mold would be smooth and the upper porous. The opposite porous molds in the consecutive hot-press units is the best mode for a foamed fiber molding machine. Thereby both sides of the end-product will be smooth and dense. Here the upper hot-press mold 36 has an electric heater 37 for heating up the mold. With dashed circles are illustrated optional cooling or heating channels 38 for increasing the performance of the tooling depending on the application. In additive manufacturing the channels can be easily applied inside any part of the mold, like the supporting structures or the porous layer itself. Here, the lower mold 11 is porous, and fluid and steam are drained through the porous layer 30 to the open volume 39.

As said earlier, in the hot-press, only one of the mold is porous. The other mold is closed, smooth and heated or cooled. Thus one side of the product is smoothing out while the water and steam run through the product via the opposite mold having a layer with porous product surface. The mold with a porous layer or skin is very advantageous for hot press because large porous surface is permeable for steam and water. This product surface without made holes gives better support than traditional solid mold pair. In said molds the other mold has holes leaving much solid to solid surface area which is prone to temperature and pressure variations. The efficiency is also affected by the solid narrow edge, which prevents suction and steam from escaping from the sides. In addition, the surface of the product is smoothed excellently. The new mold in use is quick and reliable. Especially, the mold disclosed is advantageous in the hot-pressing. Water and steam can flow quickly through the thin and porous layer to the open volume. And more, in practice the product can be formed with any other known technology, but then hot-pressed with the mold according to the invention.

The molds according to the invention have denser surface than prior art molds with made local holes but still open enough over the whole product surface for foam molded fiber products. Additive manufacturing can in addition to build fine perforations, also achieve porous metal structures. Porous metal structures can be used instead of a defined perforation and mimic a very fine undefined mesh, dictated by process parameters of the 3D printer. In this way the overall porosity of the metal structures can be controlled even though their microstructures are undefined. The porous layer is supported by a support structure that can be fused to the porous layer during the build process, typically a suitable lattice structure. This is an advantage of porous metal structures compared to defined perforated structures, the data preparation is less cumbersome because support structure placement is less critical thanks to the 3-dimensional permeability in the porous metal skin versus a perforated one.

Advantageously, the porous layer of the skin is on top of a supporting geometry, like the lattice as mentioned above. The porous layer may be a separate part to the supporting geometry but might be fused together in the manufacturing process.

Porous layer enables fluid to drain out, while leaving fibers on the top of the layer. In other words the molds according to the invention are suitable for forming unit in a foamed fiber molding machine. Additive manufacturing enables optimized mold geometries. On the other hand, this mold is advantageous for a hot-pressing unit in a fiber molding machine irrespective of the preceding forming unit. However, foam has less water to drain compared to slurry.

The mold according to the invention is additive manufactured preferably with one-piece structure. Alternatively the mold may have two parts attached to each other like the detachable skin. The skin with the support structure like the lattice and the base structure forms a cavity which makes large open space or void volume inside the mold. In other words, said space is defined by the product surface and the base structure forming a cavity bottom with thin side walls vertical or slightly inclined inwards to the mold bottom. In practice, the thin product surface opens to cavity through the porousness made by additive manufacturing.

The cavity ensures also short route through product surface for the water, air, and steam from every possible part of the product surface and the cavity contours the said surface so that there is maximum space for the product surface within the mold area. Simultaneously, there is maximum space for the molded fiber product. Also, thin structures are fast to 3D-print the mold. In practice, the wall thickness of the mold is surprisingly thin, 2 - 6 mm, advantageously 2 - 4 mm while the thickness of the base structure is 7 - 20 mm, advantageously 8 - 15 mm.

The bottom of the mold or the base structure is advantageously a bit thicker than other parts thereby ensuring rigid support for the layer forming the product surface. The surfaces or walls defining the cavity are as thin as possible just designed to sustain loading during hot-pressing. The bottom of the mold or the base structure may have inner chambers with or without lattices. The chambers may be used for fluids. At least they lighten the mold and speed up the printing.

## Claims

1. Mold for manufacturing of a molded fiber product, which mold (11) includes a permeable product surface (23) made by additive manufacturing, **characterized in that** the product surface (23) includes a porous layer (30) and an integral support structure (31) on the opposite side compared to the product surface (23), which support structure (31) consists of cavity and protrusion structures forming open volume (39).

2. Mold according to claim 1, **characterized in that** the layer (30) and the support structure (31) are arranged as a skin (24) supported to a base structure (25).

3. Mold according to claim 2, **characterized in that** the skin (24) is detachably arranged to the base structure (25).

4. Mold according to claim 2, **characterized in that** the layer (30) and the support structure (31) form a uniform structure.

5. Mold according to any of claims 1 - 4, **characterized in that** the thickness of the layer (30) is 0,5 - 10 mm, advantageously 1 - 4 mm.

6. Mold according to any of claims 1 - 5, **characterized in that** the thickness of the layer (17) is uneven in different parts of the product surface (23).

7. Mold according to any of claims 1 - 6, **characterized in that** the layer (30) has random made porosity.

8. Mold according to any of claims 1 - 7, **characterized in that** the support structure (31) includes a three-dimensional lattice (32) made by additive manufacturing.

9. Mold according to any of claims 1 - 8, **characterized in that** the base structure (25) is different material than the skin (24).

10. Mold according to any of claims 1 - 9, **characterized in that** the base structure (25) has a universal geometry for several skins (24) with different properties.

11. Mold according to any of claims 1 - 10, **characterized in that** at the center of the base structure (25) there is an outlet (33).

12. Mold according to any of claims 1 - 11, **characterized in that** the base structure (25) has a bucket-like geometry sloping to the center of the base structure (25).

13. Mold according to any of claims 1 - 12, **characterized in that** the support structure (31) contours the forms of the base structure (25).

14. Mold according to any of claims 1 - 13, **characterized in that** the mold (11) is arranged as a pair to a heated mold with a smooth product surface.

15. Mold according to claim 14, **characterized in that** the mold is a hot-press mold (36).
